# EUROPEAN PATENT APPLICATION

(11) **EP 2 141 355 A2**
(43) Date of publication of application: **06.01.2010**
(21) Application number: 09163614.2
(22) Date of filing: 24.06.2009
(51) Int. Cl.: F03D 1/06

(54) **Wind turbine blades with multiple curvatures**

(30) Priority: 30.06.2008 US 164145
(71) Applicant: General Electric Company, Schenectady, NY 12345 (US)
(72) Inventor: Bonnet, Laurent, 48432, Mesum (DE)
(74) Representative: Bedford, Grant Richard

(57) **Abstract**

A blade (20) for a wind turbine (2) includes a chord plane (22) having one spanwise portion with a first curvature (R1) and another spanwise portion with a second curvature (R2) that is different from the first curvature.

## Description

The subject matter described here generally relates to fluid reaction surfaces with specific blade structures, and, more particularly, to wind turbine blades with multiple curvatures.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

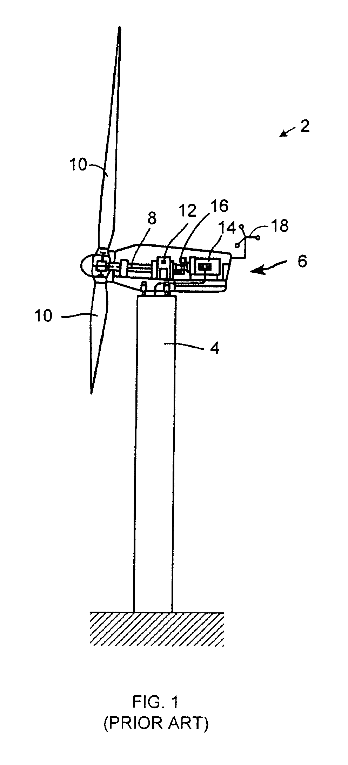

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that receives input from an anemometer 18.

The blades 10 generate lift and capture momentum from moving air that is them imparted to a rotor as the blades spin in the "rotor plane." Each blade is typically secured at its "root" end, and then "spans" radially "outboard" to a free, "tip" end. The front, or "leading edge," of the blade connects the forward-most points of the blade that first contact the air. The rear, or "trailing edge," of the blade is where airflow that has been separated by the leading edge rejoins after passing over the suction and pressure surfaces of the blade. A "chord line" connects the leading and trailing edges of the blade in the direction of the typical airflow across the blade. The length of the chord line is simply the "chord."

The chord lines are arranged in the "chord plane" of the blade. Since the chord plane is not necessarily flat, it may also be referred to as the chord surface. The center of the chord plane, or "chord plane center line," is formed by a line on the chord plane which is halfway between the leading and trailing edge of the blade 10. The "shear web plane" is perpendicular to the to the chord plane. Since the shear web plane is also not necessarily flat, it may also be referred to as the shear web surface. The center of the shear web plane, or "shear web plane center line," is formed by a line on the shear web plane which is halfway between the high pressure and low pressure surfaces of the blade 10.

The outboard ends of the blades 10 are called "tips" and the distance from the tip to the root, at the opposite end of the blade, is called the "span." Since many blades 10 change their chord over the span (and corresponding rotor radius), the chord length is referred to as the "root chord," near the root, and the "tip chord," near the tip of the blade. The resulting shape of the blade 10, when viewed perpendicular to the direction of flow, is called the "planform." The thickness of a blade 10 varies across the planform, and the term "thickness" is typically used to describe the maximum distance between the low pressure suction surface and the high pressure surface on the opposite side of the blade for any particular chord line.

Commonly-owned U.S. Patent Application Serial No. 10/953,040 (Publication No. 2006/0067828) discloses a wind turbine rotor blade with in-plane sweep. In one embodiment, the inboard section of the blade has a forward sweep relative to an elastic axis of the blade and the outboard section has an aft sweep. However, the blade that is illustrated in that publication includes only one radius of curvature.

Various drawbacks associated with such conventional approaches are addressed here in by providing, in various embodiments, a blade for a wind turbine including a chord plane having one spanwise portion with a first curvature and another spanwise portion with a second curvature that is different from the first curvature.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind generator.
FIG. 2 is a side view of a blade for use with the wind generator in FIG. 1.
FIG. 3 is a bottom view of the blade shown in FIG. 2.

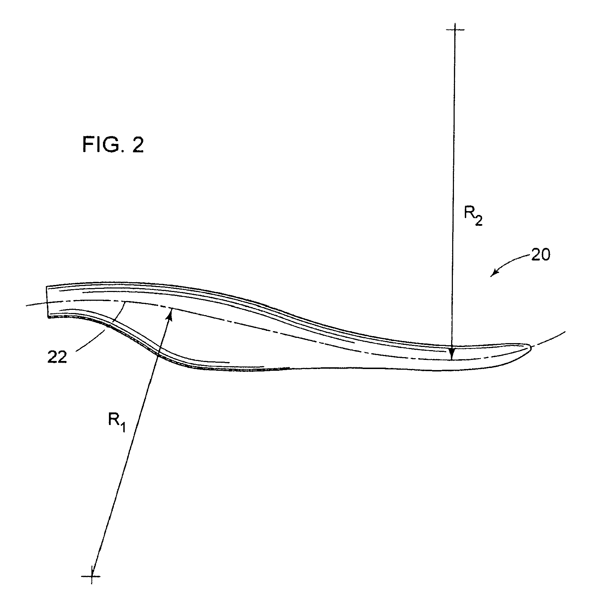

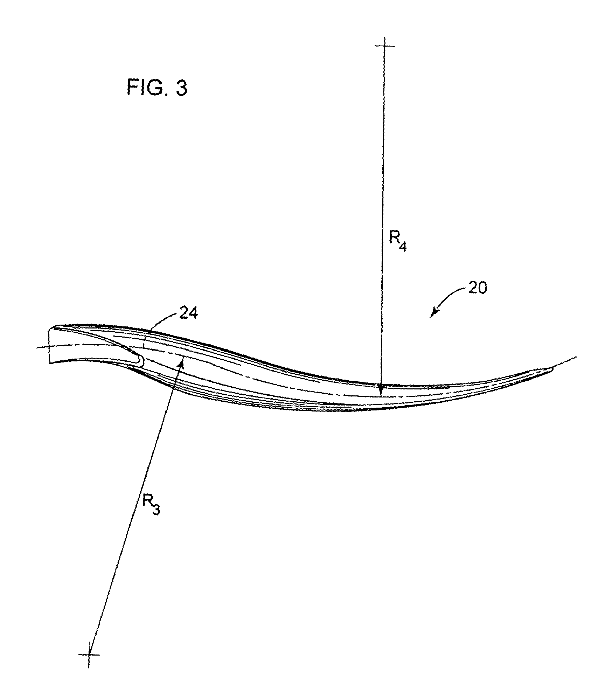

FIG. 2 is a side view of a blade 20 for use with the wind turbine 2 shown in FIG. 1, or any other wind turbine, while FIG. 3 is a bottom view of the blade 20 shown in FIG. 3. For example, the blade 20 may replace the conventional blade 10 and/or the turbine 2 may be constructed with a new blade 20.

The chord plane center line 22 shown in FIG. 2 illustrates the position of the chord plane while the shear web center line 24 shown in FIG. 3 illustrates the position of the shear web plane. Although the chord plane 22 and shear web plane 24 are illustrated here as being substantially flat along an axis extending perpendicular to the page, the chord plane and/or shear web plane are typically twisted along the span of the blade so that some or all of the surfaces of these planes are not arranged substantially perpendicular to the page.

In the example illustrated here, the chord plane center line 22 has one portion with a first curvature and another portion with a second curvature that is different from the first curvature. For example, the first and second curvatures may be different in size, shape, length, and/or other aspects of their configuration along the span of the blade 20. In the non-limiting examples illustrated here, the curvature of the first, inboard portion of the chord plane center line 22 has a fixed radius of curvature designated as R1 while the curvature of the second, outboard portion of the chord plane center line 22 has a fixed radius of curvature designated as R2. However, the length of R1 and/or R2 may vary over the length of the corresponding curvatures.

R1 and/or R2 may be designated with respect to any line on the chord plane, including the chord plane center line 22 illustrated here, the leading edge, or the trailing edge of the blade 20. In this example, R1 and R2 are different in that they are arranged on opposite sides of the chord plane, resulting in an S-shaped chord plane center line 22. However, R1 and R2 may also be arranged in other orientations on the same side of the chord plane 22, and/or R1 and R1 may have different lengths. The length of R1 and R2 may also be substantially the same. In addition to such semi-circular curvatures configurations, other curvature configurations may also be provided for one or both of the first and second curvatures, including, but not limited to any portion or combination of various types of algebraic curves, caustic curves, cissoids, conchoids, conic sections, elliptic curves, general plane curves, implicit curves, inverse curves, involutes and evolutes, pedal curves, polar curves, pursuit curves, radial curves, roulettes, strophoids, rational, transcendental, fractal, continuous, discontinuous, and/or piecewise curves, such as elliptical, parabolic, and hyperbolic.

As shown in FIG. 3, the shear web plane center line 24 may be optionally provided with one portion having a third curvature and another portion with a fourth curvature that is different from the third curvature. For example, the third and fourth curvatures may be different in size, shape, length, and/or other aspects of their configuration along the span of the blade 20. In the non-limiting examples illustrated here, the curvature of the third, inboard portion of the shear web center line 24 has a fixed radius of curvature designated as R3 while the curvature of the second, outboard portion of the shear web plane center line 24 has a fixed radius of curvature designated as R4. However, the length of R3 and/or R4 may vary over the length of the corresponding curvatures.

R3 and/or R4 may be designated with respect to any line on the shear web plane, including the shear web plane center line 24 illustrated here, the leading edge, or the trailing edge of the blade 20. In this example, R3 and R4 are different in that they are arranged on opposite sides of the chord plane, resulting in an S-shaped shear web center line 24. However, R3 and R4 may also be arranged in other orientations on the same side of the shear web plane 24, and/or R3 and R4 may have different lengths. The length of R3 and R4 may also be substantially the same. In addition to such semi-circular curvatures configurations, other curvature configurations may also be provided for one or both of the first and second curvatures, including, but not limited to any portion or combination of various types of algebraic curves, caustic curves, cissoids, conchoids, conic sections, elliptic curves, general plane curves, implicit curves, inverse curves, involutes and evolutes, pedal curves, polar curves, pursuit curves, radial curves, roulettes, strophoids, rational, transcendental, fractal, continuous, discontinuous, and/or piecewise curves, such as elliptical, parabolic, and hyperbolic.

The first, second, third, and fourth curvatures described above may be a linear or nonlinear function of one or more blade parameters such as fixed or variable geometry blade area, span, chord length along span, twist, thickness, blade deflection, passive or active flow features and/or other aerodynamic characteristics. They may be continuous or discontinuous including at any point where two or more of curvatures join together. Although the examples illustrated here show each of the curvatures joining tangentially near a midpoint of the corresponding chord plane center line 22 or shear web plane center line 24, the various curvatures are not required to connect, much less connect at a particular point along the span of the blade 22. For example, a substantially linear portion may be arranged between two curvatures. Additional curvature sections may also be provided.

The technology discussed above offer various advantages over conventional approaches. For example, wind turbine blades with multiple curvatures allow for higher aerodynamic efficiencies at lower wind speeds with improved load resistance at higher speeds. In particular, the first and second curvature provide forward chordwise sweep at the leading edge with improved bend and twist coupled behavior. Distributed shear web construction also helps to provide light-weight and high-strength, while the variable geometry helps to reduce dynamic load activity. The rotational speed of the rotor may also be tailored for a given operating mode in order to enable reduced maximum power capture for a given noise emission class.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are now defined by the following numbered clauses:
1. A blade for a wind turbine, comprising a chord plane having one spanwise portion with a first curvature and another spanwise portion with a second curvature that is different from the first curvature.
2. The blade recited in clause 1, wherein the first curvature comprises a fixed radius of curvature.
3. The blade recited in any preceding clause, wherein the second curvature comprises a fixed radius of curvature.
4. The blade recited in any preceding clause, wherein the first and second fixed radii of curvature are arranged on opposite sides of the chord plane.
5. The blade recited in any preceding clause, further comprising a shear web plane having a portion with a third curvature
6. The blade recited in any preceding clause, further comprising the shear web plane having another portion with a fourth curvature.
7. The blade recited in any preceding clause, wherein the third curvature comprises a fixed radius of curvature.
8. The blade recited in any preceding clause, wherein the fourth curvature comprises a fixed radius of curvature.
9. The blade recited in any preceding clause, wherein the first curvature comprises a fixed radius of curvature.
10. The blade recited in any preceding clause, wherein the second curvature comprises a fixed radius of curvature.
11. The blade recited in any preceding clause, wherein the second curvature comprises a fixed radius of curvature.
12. The blade recited in any preceding clause, wherein the first curvature comprises a fixed radius of curvature.
13. The blade recited in any preceding clause, wherein the second curvature comprises a fixed radius of curvature.
14. The blade recited in any preceding clause, wherein the second curvature comprises a fixed radius of curvature.
15. A blade for a wind turbine, comprising a shear web plane having one spanwise portion with a first curvature and another spanwise portion with a second curvature that is different from the first curvature.
16. The blade recited in clause 15, wherein the first curvature comprises a fixed radius of curvature.
17. The blade recited in clause 15 or 16, wherein the second curvature comprises a fixed radius of curvature.
18. The blade recited in any of clauses 15 to 17, wherein the first and second fixed radii of curvature are arranged on opposite sides of the chord plane.
19. The blade recited in any of clauses 15 to 18, further comprising a chord plane having a portion with a third curvature.
20. The blade recited in any of clauses 15 to 19, wherein the third curvature comprises a fixed radius of curvature.

## Claims

1. A blade (20) for a wind turbine (2), comprising a chord plane (22) having one spanwise portion with a first curvature (R1) and another spanwise portion with a second curvature (R2) that is different from the first curvature.

2. The blade (20) recited in claim 1, wherein the first curvature comprises a fixed radius of curvature (R1).

3. The blade (20) recited in any preceding claim, wherein the second curvature comprises a fixed radius of curvature (R2).

4. The blade (20) recited in any preceding claim, wherein the first and second fixed radii of curvature (R1,R2) are arranged on opposite sides of the chord plane.

5. The blade (20) recited in any preceding claim further comprising a shear web plane (24) having a portion with a third curvature (R3).

6. The blade (20) recited in claim 5, further comprising the shear web plane (24) having another portion with a fourth curvature (R4).

7. The blade (20) recited in claim 5 or 6, wherein the third curvature comprises a fixed radius of curvature (R3).

8. The blade (20) recited in claim 6 or 7, wherein the fourth curvature comprises a fixed radius of curvature (R4).

9. The blade (20) recited in claim 7 or 8, wherein the third and fourth fixed radii of curvature are arranged on opposite sides of the chord plane.

10. A blade (20) for a wind turbine (4), comprising a shear web (24) plane having one spanwise portion with a first curvature (R3) and another spanwise portion with a second curvature (R4) that is different from the first curvature.
